# NEUE EUROPÄISCHE PATENTSCHRIFT

(11) **EP 0 418 771 B2**
(45) Veröffentlichungstag und Bekanntmachung des Hinweises auf die Entscheidung über den Einspruch: **29.11.2000**
(45) Hinweis auf die Patenterteilung: 01.06.1994
(21) Anmeldenummer: 90117822.8
(22) Anmeldetag: 15.09.1990
(51) Int. Cl.: B29C 59/02

(54) **Kunststoff-Formteil mit genarbter Oberfläche und verbesserter Kratzfestigkeit**
Moulded plastics article with grained surface and improved scratch resistance
Objet moulé en matière plastique avec une surface grainée et une résistance à l'abrasion améliorée

(30) Priorität: 20.09.1989 DE 3931299
(43) Veröffentlichungstag der Anmeldung: 27.03.1991
(73) Patentinhaber: ADAM OPEL AG, 65423 Rüsselsheim (DE)
(72) Erfinder: Gübitz, Franz, D-6233 Kelkheim (Taunus) (DE); Grolik, Walter, D-6100 Darmstadt (DE); Kuhnhenne, Eckhard, D-6200 Wiesbaden (DE); Jaksch, Peter, D-6090 Rüsselsheim (DE)
(74) Vertreter: Kümpfel, Heinz, Dipl.-Ing.

(56) Entgegenhaltungen:
- DE-A- 1 932 178
- DE-A- 3 437 414
- FR-A- 2 059 397
- FR-A- 2 221 219
- DERWENT DATENBANK WPIL, AN=89-274491 [38], Derwent Publications Ltd, Londen,GB; & JP-A-1 199 865 (SEKISUI CHEM. IND. K.K.) 11-08-1989

## Beschreibung

Die Erfindung bezieht sich auf Kunststoff-Formteile, deren Oberflächen in der Kratzfestigkeit verbessert sind.

Die Oberflächen von Kunststoff-Formteilen werden häufig aus optischen und praktischen Gründen mit einer Narbung versehen, welche die Kratzfestigkeit verbessert. Derartige Formteile sind in und an Kraftfahrzeugen zu finden, beispielsweise als Armaturenbrett oder als Stoßfänger.

Bei der Entwicklung neuer Kraftfahrzeugtypen werden für die Innenausstattung zunehmend amorphe Kunststoffe durch teilkristalline verstärkte Kunststoffe ersetzt. Allerdings besitzen diese neuen Werkstoffe empfindlichere Oberflächen, die auch bei Narbung noch Schrammen und Kratzer bekommen können.

Die Aufgabe bestand nun darin, eine Kunststoff-Oberfläche zu finden, die eine verbesserte Kratzfestigkeit besitzt.

Es wurde gefunden, daß eine bestimmte Narbung den Anforderungen genügt.

Die Erfindung betrifft somit ein Kunststoff-Formteil mit genarbter Oberfläche und verbesserter Kratzfestigkeit, das dadurch gekennzeichnet ist, daß die Oberfläche eine Narbung besitzt, bei welcher
a) die Narbhügel eine allseitig gerundete Oberfläche besitzen,
b) die Narbhügel durch Narbtäler vollständig voneinander getrennt sind,
c) sich auf einer Strecke von 10 mm 13 bis 25 Narbhügel befinden und
d) die mittlere Rauhtiefe der Narbung 42 bis 58 µm beträgt, und wobei des Formteil aus verstärktem Polypropylen besteht.

Weiterhin betrifft die Erfindung ein Verfahren zur Verbesserung der Kratzfestigkeit der Oberfläche von Kunststoff-Formteilen.

Die erfindungsgemäß anzuwendene Narbung besteht aus einer Vielzahl kleiner Narbhügel. Der Grundriß dieser Narbhügel ist immer gerundet, beispielsweise kreisförmig, elliptisch, nierenförmig, keulenförmig oder dergleichen. Auch die Oberfläche der Narbhügel ist allseitig gerundet. Die Steigung der Hügelseiten ist gering. Die Narbhügel sind relativ flach und weisen eine weitgehend einheitliche Höhe auf.

Die Narbhügel sind vollständig voneinander durch Narbtäler getrennt. Der Boden dieser Narbtäler ist weitgehend eben, so daß der Eindruck entsteht, daß die Narbhügel einer ebenen Fläche als Erhebungen aufsitzen.

Auf einer Strecke von 10 mm befinden sich 13 bis 25, vorzugsweise 15 bis 21 Narbhügel in unregelmäßiger Anordnung.

Die mittlere Rauhtiefe der Narbung beträgt 42 bis 58, vorzugsweise 45,5 bis 55,6 µm. Unter mittlerer Rauhtiefe versteht man den Mittelwert aus den Einzelrauhtiefen von fünf aufeinander folgenden Einzelmeßstrecken. Die Messung der Rauhtiefe ist ein genormtes Verfahren (VDI/VDE-Richtlinien 2602).

Die erfindungsgemäße Narbung kann auf allen Oberflächen von Formteilen angebracht werden, die aus ästhetischen oder praktischen Gründen ein matt erscheinendes Aussehen haben sollen.

Die erfindungsgemäße Narbung wird bei Formteilen aus verstärktem Polypropylen, für Kraftfahrzeuge angewendet. Derartige Formteile besitzen Oberflächen mit sehr guter Kratzfestigkeit. Fingernägel oder Autoschlüssel und dergleichen hinterlassen praktisch keine sichtbaren Spuren. Die Narbung bewirkt somit, daß das ansprechende Aussehen neuer Teile länger erhalten bleibt.

Das Aufbringen der Narbung auf die Formteiloberfläche erfolgt zweckmäßigerweise bei der Herstellung des Formteils, indem Blas- oder Preßformen verwendet werden, die an den vorgesehenen Stellen eine negative Narbung erhalten haben.

Die Figuren zeigen die erfindungsgemäße Narbung in der Draufsicht und im Schnitt.

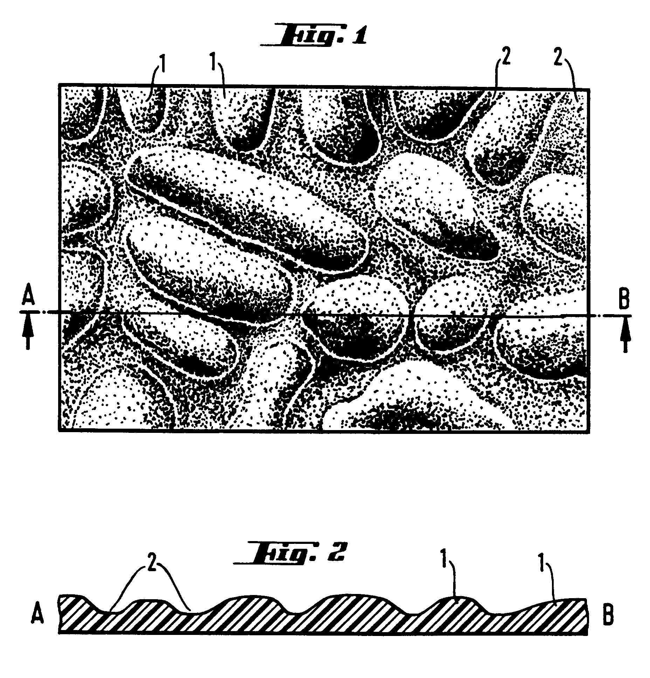

In Figur 1 ist die Narbung in der Draufsicht zu sehen. Zu erkennen sind die allseitig gerundete Form der Narbhügel (1) und die flachen Narbtäler (2).

Noch deutlicher wird dies aus Figur 2, welche einen Schnitt AB senkrecht zur Formteiloberfläche darstellt. Unregelmäßig große Narbhügel (1) mit gerundeter Form wechseln mit flachen Narbtälern (2) ab.

Das nachfolgende Beispiel soll die Erfindung näher erläutern.

### Beispiel

Platten aus talkumverstärktem Polypropylen wurden auf einer Seite mit einer Narbung gemäß dem Stand der Technik versehen. Weitere Platten aus dem gleichen Werkstoff erhielten eine Narbung gemäß Figuren 1 und 2. An beiden Mustern wurden Kratzversuche in einem Kratzgerät durchgeführt, indem über die genarbte Oberfläche ein Schlitten mit konstanter Geschwindigkeit gezogen wurde. Der Schlitten besaß an seiner Unterseite auswechselbare Kratzstichel und konnte mit verschiedenen Gewichten belastet werden. Die Versuche wurden mit steigender Belastung durchgeführt. Die Ergebnisse sind in der Tabelle zusammengestellt.

| | Narbung nach Stand der Technik | erfindungsgemäße Narbung |
|---|---|---|
| mittlere Rauhtiefe | 66,7 µm | 50,4 µm |
| maximale Rauhtiefe | 77,6 µm | 61,8 µm |
| spitzer Kratzstichel Belastung 500 g runder Kratzstichel (r = 0,5 mm) Belastung 600 g | starkes Zerquetschen oder Umbiegen der Narbstruktur Glätten und Polieren der Narbhügel-Oberfläche | schwaches Zerquetschen oder Umbiegen der Narbstruktur kaum wahrnehmbares Glätten und Polieren der Narbhügel-Oberfläche |

## Patentansprüche

1. Kunststoff-Formteil mit genarbter Oberfläche und verbesserten Kratzfestigkeit, dadurch gekennzeichnet, daß die Oberfläche eine Narbung besitzt, bei welcher
a) die Narbhügel eine allseitig gerundete Oberfläche besitzen,
b) die Narbhügel durch Narbtäler vollständig voneinander getrennt sind,
c) sich auf einer Strecke von 10 mm 13 bis 25 Narbhügel befinden und
d) die mittlere Rauhtiefe der Narbung 42 bis 58 µm beträgt,
und daß das Formteil ein Formteil aus verstärktem Polypropylen ist.

2. Verfahren zur Verbesserung der Kratzfestigkeit der Oberfläche von Kunststoff-Formteilen durch Narben, dadurch gekennzeichnet, daß man die Formteil-Oberfläche mit einer Narbung versieht, bei welcher
a) die Narbhügel eine allseitig gerundete Oberfläche besitzen,
b) die Narbhügel durch Narbtäler vollständig voneinander getrennt sind,
c) sich auf einer Strecke von 10 mm 13 bis 25 Narbhügel befinden und
d) die mittlere Rauhtiefe der Narbung 42 bis 58 µm beträgt,
und daß man als Formteil ein Formteil aus verstärktem Polypropylen verwendet.

## Claims

1. A shaped plastic article having a grained surface of improved scratch resistance, characterised in that the surface has a grain such that
a) the grain hills have a rounded surface on all sides,
b) the grain hills are completely separated from one another by grain valleys,
c) there are from 13 to 25 grain hills over a distance of 10 mm, and
d) the average peak-to-valley height of the grain is from 42 to 58 µm,
and in that the shaped article is a shaped article made of reinforced polypropylene.

2. A process for improving the scratch resistance of the surface of shaped plastic articles by graining, characterised in that the surface of the shaped article is provided with a grain such that
a) the grain hills have a rounded surface on all sides,
b) the grain hills are completely separated from one another by grain valleys,
c) there are from 13 to 25 grain hills over a distance of 10 mm, and
d) the average peak-to-valley height of the grain is from 42 to 58 µm,
and in that a shaped article made of reinforced polypropylene is used as the shaped article.

## Revendications

1. Pièce moulée de matière plastique ayant une surface grainée et présentant une résistance améliorée à la rayure, caractérisée en ce que la surface possède un grainage dans lequel :
a) les mamelons du grainage ont une surface arrondie de tous les côtés,
b) les mamelons du grainage sont entièrement séparés les uns des autres par des vallons de grainage,
c) sur une distance de 10 mm, se trouvent 13 à 25 mamelons de grainage et
d) la profondeur de rugosité moyenne du grainage est de 42 à 58 µm,
et en ce que la pièce moulée est une pièce moulée en polypropylène renforcé.

2. Procédé d'amélioration de la résistance à la rayure de la surface des pièces moulées de matière plastique par grainage, caracterisé en ce qu'on munit la surface d'un grainage dans lequel :
a) les mamelons du grainage ont une surface arrondie de tous les côtés,
b) les mamelons du grainage sont entièrement séparés les uns des autres par des vallons de grainage,
c) sur une distance de 10 mm, se trouvent 13 à 25 mamelons de grainage et
d) la profondeur de rugosité moyenne du grainage est de 42 à 58 µm
et en ce qu'on utilise comme pièce moulée une pièce moulée en polypropylène renforcé.
